(19) Europäisches Patentamt
European Patent Office
Office européen des brevets

(11) **EP 4 697 537 A1**

(12) **EUROPEAN PATENT APPLICATION**

(43) Date of publication:
**18.02.2026 Bulletin 2026/08**

(21) Application number: **24194841.3**

(22) Date of filing: **16.08.2024**

(51) International Patent Classification (IPC):
***H02J 3/00*** *(2026.01)* ***H02J 13/00*** *(2026.01)*

(52) Cooperative Patent Classification (CPC):
**H02J 3/0012; H02J 13/00; H02J 13/12;**
H02J 2101/28; H02J 2103/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Gamesa Renewable Energy
A/S**
**7330 Brande (DK)**

(72) Inventors:
• **Gomes Guerreiro, Gabriel Miguel**
  **2800 Kongens Lyngby (DK)**
• **Martin, Frank**
  **2630 Taastrup (DK)**
• **Sharma, Ranjan**
  **3450 Allerød (DK)**
• **Goldenbaum, Nikolaus**
  **8680 Ry (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **ESTIMATING GRID IMPEDANCE**

(57)     The present invention relates to a method to estimate an impedance of an electrical distribution grid (7) in a system comprising a renewable power source (2, 3, 4, 5) connected to feed power into the electrical distribution grid (7), the method including the steps;
- select an actual physical bus (10) in the linkage between the renewable plant and the electrical grid;
- provide bus voltage ($V$bus) and current ($I$bus) samples measured at the bus,
- defining a grid equivalent circuit connected to the selected bus with a grid resistance (Rg), a grid reactance (Xg), a grid equivalent voltage (Vg)
- use the grid resistance (Rg), grid reactance (Xg), grid equivalent voltage (Vg) as three unknowns and the bus voltage ($V$bus) and current ($I$bus) samples as knowns in an optimization algorithm to provide an estimation of the grid impedance, $\mathbf{Z} = Rg + jXg$.

The present invention further relates to the processor adapted to operate the method, and a wind farm being operated according to the method.

FIG 3

EP 4 697 537 A1

**EP 4 697 537 A1**

**Description**

FIELD OF THE INVENTION

The invention relates to a method to estimate an impedance of an electrical utility grid, especially in relation to power generated by a renewable power generator. The renewable power generator could e.g. be photovoltaic power station (also referred to as a solar plant or farm) or wind parks or farms including a plural of individual wind turbines.
Requirements regarding electrical characteristics are constantly increasing and is becoming more complex. As a result, when it comes to the modelling, testing and validation of grid compliance and other related activities, then it is becoming more complex for unit-level equipment manufacturers (e.g., wind turbine, solar panels, etc) and power plant developers and operators.
One of the most important factors that affect the performance of wind turbines, solar photovoltaic systems, and other devices, is the equivalent grid impedance of the electrical grid whereto it is connected. From that, two measures are often used to have a better understanding of the grid impedance, one being the X/R ratio (the ratio of reactance to resistance of the connecting lines) and the other being the short-circuit ratio (SCR), which are commonly used in grid compliance of wind turbines, power plants, and other equipment to define the power grid strength.
The impact of the electrical grid characteristics on for example performance of a wind farm traditionally is estimated by offline studies, where a worst-case situation is applied.
This approach has several implications:

- The maximum installed capacity at a given site is defined by a worst-case scenario, and hence the full potential is not utilized.
- Controllers are parameterized and the functions are setup with the aim to achieve sufficient robustness in the worst-case situation. This means they may not perform optimally under other conditions.
- Reactive capability investigations are based on the worst-case scenario. This might entail installation of additional reactive compensation equipment which is only required for a very limited time.

Recently, where in many geographical areas substantial fractions of the power comes from renewable energy resources, it has become more crucial to monitor the conditions of the utility grid conditions on a continuous basis. During the operation of e.g. many wind power plants, very little is known about the constant evolution of grid strength as well as sudden changes caused by changes in the grid topology.

SUMMARY OF THE INVENTION

This present invention aims to solve the above problems. This includes introducing a method to estimate an impedance of an electrical distribution grid in a system comprising a renewable power source connected to feed power into the electrical distribution grid, the method including the steps;

- select an actual physical bus in the linkage between the renewable plant and the electrical grid;
- provide bus voltage ($V_{bus}$) and current ($I_{bus}$) samples measured at the bus,
- defining a grid equivalent circuit connected to the selected bus with a grid resistance (Rg), a grid reactance (Xg), a grid equivalent voltage (Vg)
- use the grid resistance (Rg), grid reactance (Xg), grid equivalent voltage (Vg) as three unknowns and the bus voltage ($V_{bus}$) and current ($I_{bus}$) samples as knowns in an optimization algorithm to provide an estimation of the grid impedance, $Z$ = Rg + jXg.

The grid equivalent circuit may be defined to form a voltage source behind an impedance with a grid voltage phase angle ($\delta\_y$), grid equivalent voltage (Vg) and the grid impedance, $Z$ = Rg + jXg. This is a simple representation reducing complexity and calculations including the useful parameters.
For example, for more precision the method may further use a grid equivalent voltage phase $\delta\_g$ and where the grid equivalent voltage phase $\delta\_g$ is a fourth unknown.
The grid equivalent voltage phase angle ($\delta\_g$) may be the difference between the bus voltage phase angle ($\delta\_V_{bus}$) and the grid voltage angle ($\delta\_y$) ($\delta\_g = \delta\_V_{bus} - \delta\_y$).
The optimization algorithm may include error analysis using the respective active power ($P_{bus}$) and reactive power ($Q_{bus}$) at the selected bus. In this manner given precision can be obtained.
The error analysis may include using a formula calculation of the grid equivalent voltage (Vg) and the respective active power ($P_{bus}$) and reactive power ($Q_{bus}$) at the selected bus.
The error analysis may be based on the formula:

2

$$Error_1 = \left( V_{bus}^2 + \left(\frac{S_{bus}}{V_{bus}}\right)^2 . Z_g^2 - 2\left(R_g . P_{bus} + X_g . Q_{bus}\right) - V_g^2 \right)^2$$

The error analysis further includes the power flow equations of the respective active power ($P_{bus}$) and reactive power ($Q_{bus}$) at the selected bus.

The error analysis may include using the error functions:

$$Error_2 = \left( V_{bus}^2 * G_g + V_{bus} * V_g * \left(G_g * \cos(\delta_g) + B_g * \sin(\delta_g)\right) - P_{bus}\right)^2$$

$$Error_3 = \left( -V_{bus}^2 * B_g + V_{bus} * V_g * \left(G_g * \sin(\delta_g) - B_g * \cos(\delta_g)\right) - Q_{bus}\right)^2$$

The error analysis may be based on a weighted function of Error1, Error2 and Errors.

The optimization algorithm may include methods such as Sequential Least Squares Programming (SLSQP), Particle Swarm Optimization (PSO), and/or Constrained Optimization by Linear Approximation (COBYLA), or any other algorithms.

The optimizing algorithms may be solving constrained problems with boundaries, equality and/or inequality constraints.

In one embodiment the system comprising a renewable power generator is a wind farm and the renewable power generators are a plural of wind turbines forming the wind farm.

In an embodiment, the invention relates to a processor adapted to operate the method according to any of the previous embodiments. The processor will include the needed means to perform the calculations etc., data memory storage, data exchange means etc.

The invention further relates to the controller adapted to operate the method according to any of the previous embodiments. The controller will include the needed means to perform the calculations etc. (processor), data memory storage, data exchange means etc.

The invention further relates to a wind farm being operated by the grid impedance estimation according to the method of any of the embodiments.

The object of the invention is achieved by the independent claims. The dependent claims describe advantageous developments and modifications of the invention.

BRIEF DESCRIPTION OF THE DRAWINGS

Embodiments of the invention are now described, by way of example only, with reference to the accompanying drawings, of which:

Figure 1 shows a schematic and typical electrical supply and distribution system supplied by power produced by renewable power sources.

Figure 2 shows an example of voltage $V_{ppc}$, active power P. and reactive power Q, for 5 days of operation on a given wind power plant.

Figure 3 shows a grid equivalent represented by an impedance and a voltage source.

Figure 4 illustrates a test of the present method in first tests in relation to a prototype wind turbine.

In Figure 5, the test results for method used on a given Wind Power Plant is presented.

The illustration in the drawings is in schematic form. It is noted that in different figures, similar or identical elements may be provided with the same reference signs.

DETAILED DESCRIPTION OF THE DRAWINGS

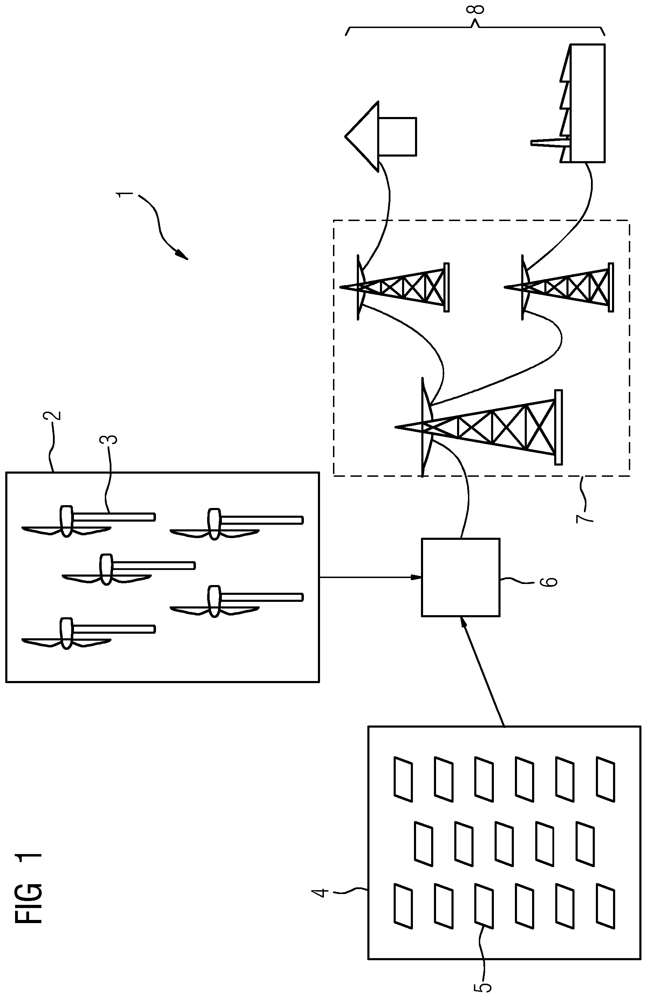

Figure 1 illustrates a schematic and typical electrical supply and distribution system 1 supplied by power produced by renewable power sources 2, 4.

The renewable power sources 2, 4 could include for wind power plants, or wind farms, 2, each comprising a plural of individual wind turbines 3 formed with a tower and a nacelle comprising a hub and rotor with blades to catch the wind and a generator to convert a rotation into electrical power. Another example of a renewable power source is photovoltaic plants 4, or solar parks or farms, each comprising a plural of photovoltaic cells 5.

The generated power is feed to distributions systems 6 including substations, transformers etc. From the distribution systems 6 it is feed to the electrical distribution grid 7, or utility grid, to be provided as power for end users 8.

Typically, distribution grid operates at a standardized nominal frequency, or mains frequency, which is the frequency of the oscillations of alternating current (AC) and is in large parts of the world 50 Hz or 60 Hz.

The renewable power sources 2, 4 needs to be adapted to provide current under given constraints, such as a nominal frequency, an agreed amount of power to be supplied over a given period of time, etc.

As the fraction of the total power in the utility grids stemming renewable energy plants 2, 4 is increasing, they therefore also get a higher and more important impact on the power quality. The grid impedance is related to the occurring grid feedback and some estimation of the grid impedance is necessary, also due to changing grids, such by extensions, additions etc.

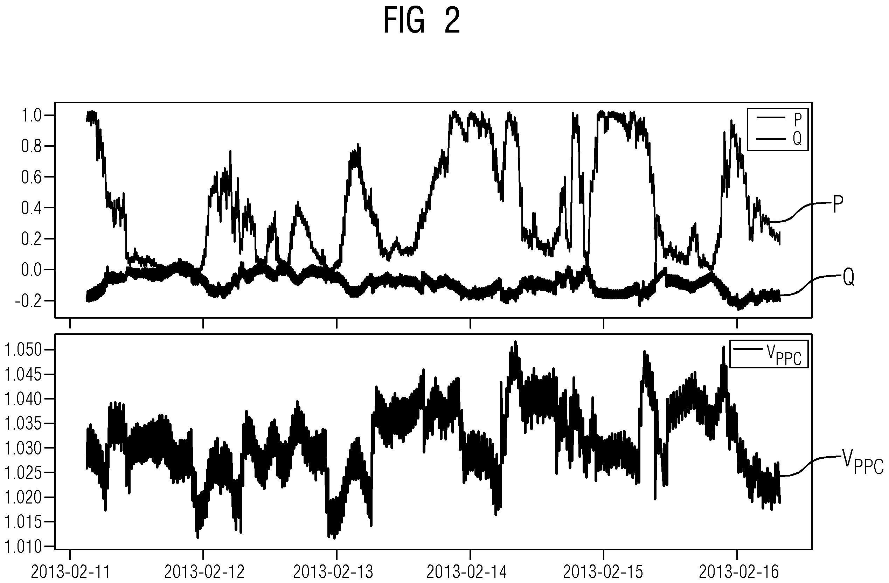

Figure 2 shows an example of voltage Vpcc, active power P. and reactive power Q, measurements at the point of common coupling (PCC) for 5 days of operation in a given wind power plant. These are the basic quantities needed for the estimation according to the present invention.

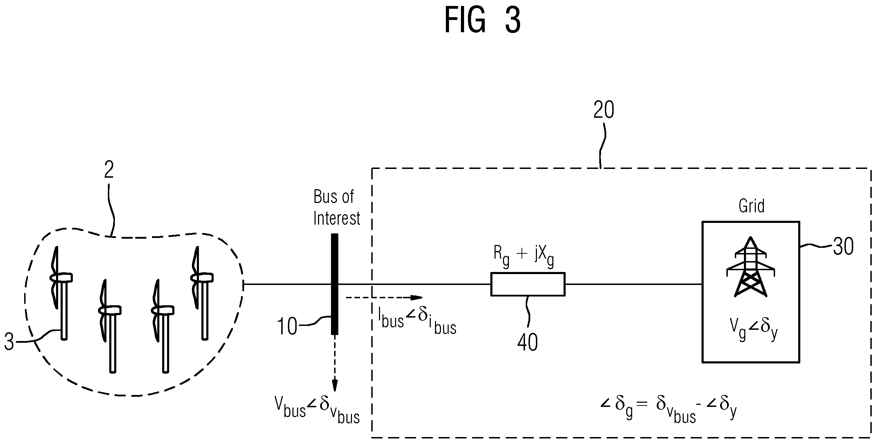

Figure 3 shows a setup representative electrical circuit how to estimate the grid impedance, a method that can be used during installation of or continuously being used to monitor the grid impedance the renewable power sources 2, 4 during its operation. The said "Bus of Interest" may be the PCC or any other suitable measurement point.

In the figure the renewable power source 2 is exemplified as a wind farm 2 with a plural of wind turbines 3, but it may also include photovoltaic plants 4 or any other renewable production source.

The renewable power source 2 is connected to actual physical busses in the interconnection to the electrical distribution grid 7, and in the present method one such actual bus 10 is selected.

To represent the power distribution grid 7 a simple grid equivalent circuit 20 is defined. In the illustrated embodiment the grid equivalent circuit 20 is defined to form a first part 30 operating at a grid voltage magntitude and phase angle, Vg and $\delta$y, and a second part 40 interconnecting the selected bus and the first part and having the grid impedance, $\mathbf{Z_g}$ = Rg + jXg.

At the selected 10 it is possible to know, e.g. by measurements, the provide bus voltage ($\mathbf{V}_{bus}$) and current ($\mathbf{I}_{bus}$).

Bold indicates a vector which can be represented e.g. in polar form as a value Vbus and an phase angle $\delta\_V_{bus}$.

The first part 30 of the grid equivalent circuit 20 thus defines the voltage of the utility grid including the voltage level Vg, or amplitude, and phase angle $\delta\_y$.

The second part 40 thus defines the grid impedance $\mathbf{Z}$g as experienced by the renewable power sources 2, 4, the value to estimate, where this again depends on the phase shift $\delta\_g$ over the second part 40 from the selected bus 10 to the first part 30, which is the difference between the bus voltage phase angle $\delta\_V_{bus}$ and the grid voltage angle $\delta\_y$, (5_g = $\delta\_V_{bus}$ - $\delta\_y$).

In the present, what is used as the relevant variables from the grid equivalent circuit 20 is the grid equivalent impedance $\mathbf{Z}$g parts the resistance Rg and the reactance Xg, and the voltage magnitude of the grid voltage equivalent Vg. The phase shift angle $\delta$g over the second part 40 can eventually also be used if necessary.

From the circuits as presented in figure 2 a voltage relation can be setup:

$$V_{bus} = I_{bus}.Z_g + V_g$$

By using that $\mathbf{I}_{bus}$ = ($\mathbf{S}_{bus}/\mathbf{V}_{bus}$)*, then:

$$V_{bus} = I_{bus}.Z_g + V_g \rightarrow\rightarrow V_g = V_{bus} - (S_{bus}/V_{bus})^*.Z_g$$

By applying mathematical manipulation in these equations, it is possible to obtain the following equation:

$$V_g^2 = V_{bus}^2 + \left(\frac{S_{bus}}{V_{bus}}\right)^2 .Z_g^2 - 2\left(R_g.P_{bus} + X_g.Q_{bus}\right)$$

Furthermore, from power systems theory there are two power flow equations, respectively for the apparent power $P_{bus}$ and the reactive power $Q_{bus}$ in the selected bus 10 are given by:

$$P_{bus} = V_{bus}^2 * G_g + V_{bus} * V_g * \left(G_g * \cos(\delta_g) + B_g * \sin(\delta_g)\right)$$

and

$$Q_{bus} = -V_{bus}^2 * B_g + V_{bus} * V_g * \left(G_g * \sin(\delta_g) - B_g * \cos(\delta_g)\right)$$

From these latter three equations three errors can be obtained:

$$Error_1 = \left(V_{bus}^2 + \left(\frac{S_{bus}}{V_{bus}}\right)^2 . Z_g^2 - 2\left(R_g . P_{bus} + X_g . Q_{bus}\right) - V_g^2\right)^2 \quad (1),$$

$$Error_2 = \left(V_{bus}^2 * G_g + V_{bus} * V_g * \left(G_g * \cos(\delta_g) + B_g * \sin(\delta_g)\right) - P_{bus}\right)^2 \quad (2),$$

$$Error_3 = \left(-V_{bus}^2 * B_g + V_{bus} * V_g * \left(G_g * \sin(\delta_g) - B_g * \cos(\delta_g)\right) - Q_{bus}\right)^2 \quad (3)$$

The error functions can be either presented as $Error_x^2$ or $\sqrt{Error_x^2}$, x representing 1, 2 or 3.

Equations (1), (2) and (3) are at the pilar of the estimation. In many occasions, only Equation (1) is necessary, where ($R_g$, $X_g$, $V_g$) are unknowns. But on some occasions, if less error is desired, the algorithm can use the remaining two equations with an additional unknown ($\delta_g$) with very low weight to decrease the error. In that either two equations are used:

$$f\left(R_g, X_g, V_g\right) = \sum_{i=0}^{n} Error_{1i}$$

or

$$f\left(R_g, X_g, V_g, \delta_g\right) = \sum_{i=0}^{n} w_1 * Error_{1i} + w_2 * Error_{2i} + w_3 * Error_{3i}$$

Where n is the number of samples used being the number of selected bus 10 measurements.

In total this gives using either equation (1) with three unknown variables, or further including equations (2) and/or (3) giving up to three equations with up to four unknown variables.

To solve the equations optimization algorithms are used, where non-exhaustive examples include different solvers for example Sequential Least Squares Programming (SLSQP), Constrained Optimization by Linear Approximation (COBYLA), Particle Swarm Optimization (PSO), among others. These algorithms can solve constrained problems with boundaries, equality and inequality constraints. It is also possible to augment the algorithms with the Jacobian (first partial derivative) and Hessian (second partial derivative).

Such an optimization algorithm can use N number of samples at each time step to predict the grid quantities. That means that every time step, the algorithm will use the current sample and the past N-1 samples to solve the equations and minimize the error. As previous, the samples are the selected bus 10 measurements.

The boundaries to the optimization problem can be of two kinds, absolute and relative.

For the absolute boundaries, general knowledge can be applied, such as the values for resistance, reactance and voltage magnitude of the known physical limitations in power systems and in some situations about the specific wind power plant where known grid configurations are sometimes known.

For relative boundaries, the averages of the previous N samples can be applied within a region of accepted changes. Relative boundaries can be particularly useful to avoid measurement errors driving the estimations to fall outside desired ranges. In other words, it keeps a sort of a smooth transition between states.

As an example, if it is known that in steady-state operation, the grid voltage Vg cannot generally be below 0.92 p.u. and above 1.08 p.u. These values can naturally be adjusted to wider quantities. Furthermore, if it is known that the absolute highest value for Xg should 1 where the SCR would also be 1, which is the theoretical minimum that SCR can reach for full power transfer capability. Naturally, these values can be altered.

Thus, in an example the used boundaries (*Boundaries*$_{abs}$) could be selected as:

$$Boundaries_{abs} = \begin{cases} V_g = (0.92, 1.08) \\ R_g = (0.01, 0.2) \\ X_g = (0.01, 1) \end{cases}$$

In an additional or alternative embodiment, the optimization algorithm further utilizes inequality constraints. They apply physical knowledge on the results that are obtained, such as the SCR and X/R being estimates. Like the boundaries, it is also possible to apply absolute constraints or relative constraints. The inequalities constraints can be modified to allow better performance of the optimization algorithms and improve convexity of the problem. The inequality constraints (*Ineq_Constraints*$_{abs}$) for example could be given by:

$$Ineq\_Constraints_{abs} = \begin{cases} SCR_{min} < \dfrac{1}{R_g + jX_g} < SCR_{max} \\ X/R_{min} < \dfrac{X_g}{R_g} < X/R_{max} \end{cases}$$

In both *Boundaries*$_{abs}$ and *Ineq_Constraints*$_{abs}$, absolute values are used for the entire duration of the optimization.

In an additional or alternative embodiment, the constraints are relative to previous estimations of the algorithm. This helps to avoid large deviations due to for example measurement errors. As an example, N number of previous estimations can be averaged and used as basis for applying constraints to the next guesses:

$$R_{g,N-1} = \frac{\sum_{j=i-N}^{N-1} R_{g,j}}{N}, the\ same\ for\ other\ quantities$$

$$Boundaries_{relative} = \begin{cases} V_g = (V_{g,N-1} * 95\%, V_{g,N-1} * 105\%) \\ R_g = (R_{g,N-1} * 50\%, R_{g,N-1} * 150\%) \\ X_g = (X_{g,N-1} * 50\%, X_{g,N-1} * 150\%) \end{cases}$$

$$Ineq\_Constraints_{abs}$$
$$= \begin{cases} \left(\dfrac{1}{R_{g,N-1} + jX_{g,N-1}}\right) * 50\% < \dfrac{1}{R_g + jX_g} < \left(\dfrac{1}{R_{g,N-1} + jX_{g,N-1}}\right) * 150\% \\ \left(\dfrac{X_{g,N-1}}{R_{g,N-1}}\right) * 50\% < \dfrac{X_g}{R_g} < \left(\dfrac{X_{g,N-1}}{R_{g,N-1}}\right) * 150\% \end{cases}$$

Once the knowledge of the distribution of the desired grid is established, then other types of relative constraints using longer time periods can also be applied.

Error tolerances can be parametrized, for example the optimization algorithms may behave better when tolerances are between 1e-10 and 1e-12. Furthermore, the number of iterations for each optimization step should also be set. The higher the number, the more the optimization algorithm will take at each time-step. A trade-off between accuracy and computational time needs to be achieved.

The algorithm also possesses the possibility of optimally finding the best tolerance given the error on the data. This is relevant when defining the tolerance for the optimization. Since SCR usually does change much in a power system, it is possible to tune the algorithm to be stable in a short time window, therefore creating an overarching algorithm that can find the optimal error.

Since the optimization algorithms are passive and uses only steady-state quantities, applying voltage or power changes is not needed for the algorithm to perform the estimation. The algorithm therefore can run constantly on continuous data.

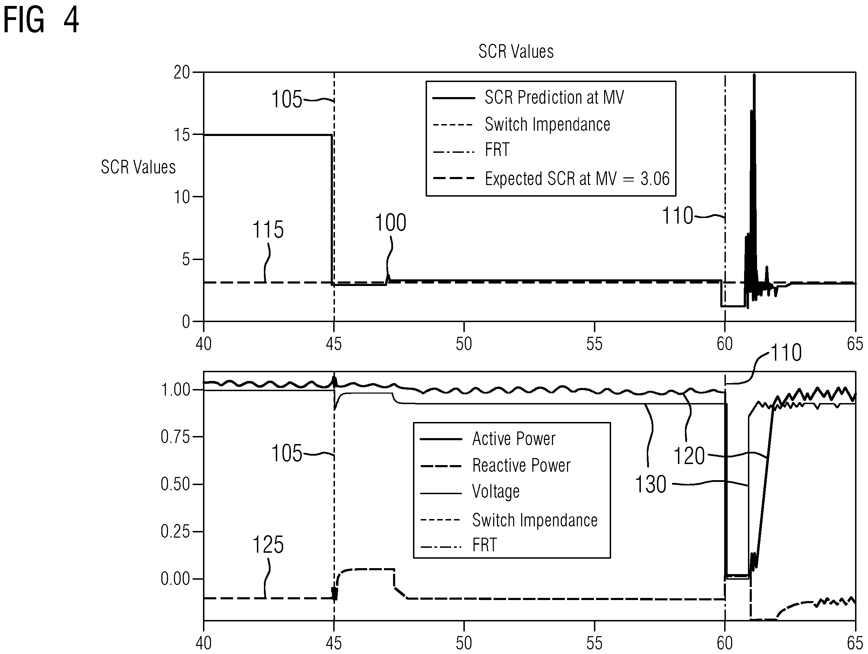

Figure 4 illustrates a test of the present method in first tests in relation to a prototype wind turbine showing for the active power 120, reactive power 125, and positive sequence voltage 130 (P, Q and V) (lower figure). In the illustrated test, at 45 seconds 105, the impedance on site is switched ON and changing the quantities of the three values, active power 120, reactive power 125 and voltage 130, and these three values are used as input to the optimization algorithm that observes these changes and calculates an SCR, 100, close to the value of 3 in the area between the switch on time 105 and a second event 110 (in the present test a Fault-Ride-Through, FRT), which as the dotted line 100 represents the expected SCR according to the calculations based on the site knowledge.

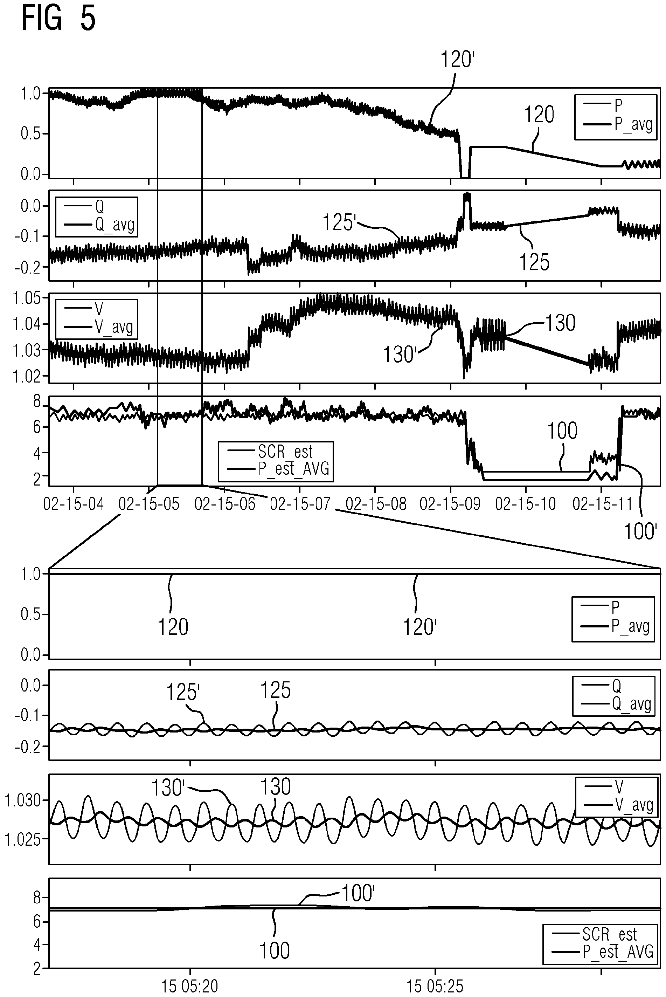

In Figure 5, the test results for method used on a givenWind Power Plant is presented. In each subplot, raw data values for active power 120, reactive power 125, voltage 130 and SCR 100 estimated at the selected bus 10.

The lower figure shows a zoom-in of parts of the data of the larger scale upper figure. In the illustrated test there has been active perturbation of the voltage reference, shown better by the lower figure zoomed-in on a given part of the data. To analyze if the algorithm is able to still estimate 100' the SCR 100, an averaging moving filter was applied to "remove" the effect of the active perturbation to obtain active power 120', reactive power 125' and voltage 130'. I

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

### Claims

1. Method to estimate an impedance of an electrical distribution grid (7) in a system comprising a renewable power source (2, 3, 4, 5) connected to feed power into the electrical distribution grid (7), the method including the steps;

   - select an actual physical bus (10) in the linkage between the renewable plant and the electrical grid;
   - provide bus voltage ($V_{bus}$) and current ($I_{bus}$) samples measured at the bus,
   - defining a grid equivalent circuit connected to the selected bus with a grid resistance (Rg), a grid reactance (Xg), a grid equivalent voltage (Vg)
   - use the grid resistance (Rg), grid reactance (Xg), grid equivalent voltage (Vg) as three unknowns and the bus voltage ($V_{bus}$) and current ($I_{bus}$) samples as knowns in an optimization algorithm to provide an estimation of the grid impedance, $\mathbf{Z}$ = Rg + jXg.

2. Method according to claim 1, wherein the grid equivalent circuit is defined to form a voltage source behind an impedance with a grid voltage phase angle ($\delta\_y$), grid equivalent voltage (Vg) and the grid impedance, $\mathbf{Z}$ = Rg + jXg.

3. Method according to claim 1 or 2, wherein the method further uses a grid equivalent voltage phase $\delta\_g$ and where the grid equivalent voltage phase $\delta\_g$ is a fourth unknown.

4. Method according to claim 1, 2 or 3, wherein grid equivalent voltage phase angle ($\delta\_g$) is the difference between the bus voltage phase angle ($\delta\_V_{bus}$) and the grid voltage angle ($\delta\_y$) ($\delta\_g = \delta\_V_{bus} - \delta\_y$).

5. Method according to claim 1, 2, 3 or 4, wherein the optimization algorithm includes error analysis using the respective active power $\mathbf{P}_{bus}$ and reactive power $\mathbf{Q}_{bus}$ at the selected bus.

6. Method according to claim 5, wherein the error analysis includes using a formula calculation of the grid equivalent voltage (Vg) and the respective active power $\mathbf{P}_{bus}$ and reactive power $\mathbf{Q}_{bus}$ at the selected bus.

7. Method according to claim 6, wherein the error analysis is based on the formula:

$$Error_1 = \left(V_{bus}^2 + \left(\frac{S_{bus}}{V_{bus}}\right)^2 . Z_g^2 - 2\left(R_g . P_{bus} + X_g . Q_{bus}\right) - V_g^2\right)^2$$

8. Method according to 5, 6 or 7, wherein the error analysis further includes the power flow equations of the respective active power $P_{bus}$ and reactive power $Q_{bus}$ at the selected bus.

9. Method according to claim 8, wherein the error analysis includes using the error functions:

$$Error_2 = \left(V_{bus}^2 * G_g + V_{bus} * V_g * \left(G_g * \cos(\delta_g) + B_g * \sin(\delta_g)\right) - P_{bus}\right)^2$$

$$Error_3 = \left(-V_{bus}^2 * B_g + V_{bus} * V_g * \left(G_g * \sin(\delta_g) - B_g * \cos(\delta_g)\right) - Q_{bus}\right)^2$$

10. Method according to claim 8, wherein the error analysis is based on a weighted function of Error1, Error2 and Errors.

11. Method according to any of the previous claims, wherein the optimization algorithm uses Sequential Least Squares Programming (SLSQP), Particle Swarm Optimization(PSO), and/or Constrained Optimization by Linear Approximation (COBYLA).

12. Method according to any of the previous claims, wherein optimizing algorithms solves constrained problems with boundaries, equality and/or inequality constraints.

13. Method according to any of the preceding claims, wherein system comprising a renewable power generator is a wind farm and the renewable power generators are a plural of wind turbines forming the wind farm.

14. Processor adapted to operate the method according to any of the claims 1-13.

15. Wind farm being operated by the grid impedance estimation according to the method of any of the claims 1-13.

FIG 1

# FIG 2

EP 4 697 537 A1

FIG 3

FIG 4

SCR Values

105, 115, 100, 110: SCR Prediction at MV, Switch Impendance, FRT, Expected SCR at MV = 3.06

SCR Values

Active Power, Reactive Power, Voltage, Switch Impendance, FRT

110, 105, 125, 120, 130

FIG 5

Europäisches
Patentamt
European
Patent Office
Office européen
des brevets

**EUROPEAN SEARCH REPORT**

Application Number

EP 24 19 4841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/025860 A1 (ANDRESEN BJORN [DK] ET AL) 22 January 2015 (2015-01-22) | 1-6, 13-15 | INV. H02J3/00 |
| Y | * paragraphs [0055], [0053], [0057]; figure 1 * <br> * paragraph [0060]; figure 2 * <br> * paragraph [0024] * <br> * paragraph [0063] - paragraph [0066]; figure 1 * | 7-12 | H02J13/00 |
| Y | LV GANYUN GANYUN_LV@NJIT EDU CN ET AL: "Power System Equivalent Parameters Tracking with PSO Based Optimal Quadratic Form Method", PROCEEDINGS OF THE 2020 3RD INTERNATIONAL CONFERENCE ON ELECTRONICS AND ELECTRICAL ENGINEERING TECHNOLOGY, ACMPUB27, NEW YORK, NY, USA, 27 September 2020 (2020-09-27), pages 16-22, XP058483936, DOI: 10.1145/3429536.3429544 ISBN: 978-1-4503-8756-9 * equations 6, 8,9; page 18; figure 1 * <br> * page 18, paragraph 3. * <br> * page 19, paragraph 4.; figure 2 * | 7-12 | |
| A | PENG SANG ET AL: "Circuit-theoretic Joint Parameter-State Estimation -- Balancing Optimality and AC Feasibility", ARXIV.ORG, CORNELL UNIVERSITY LIBRARY, 201 OLIN LIBRARY CORNELL UNIVERSITY ITHACA, NY 14853, 16 April 2024 (2024-04-16), XP091729637, * figures 2,3 * | 1 | |

TECHNICAL FIELDS
SEARCHED (IPC)

H02J

The present search report has been drawn up for all claims

| Place of search | Date of completion of the search | Examiner |
|---|---|---|
| Munich | 2 February 2025 | Maucher, Bastian |

EPO FORM 1503 03.82 (P4C01)

## ANNEX TO THE EUROPEAN SEARCH REPORT
## ON EUROPEAN PATENT APPLICATION NO.

EP 24 19 4841

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2025

| Patent document cited in search report | Publication date | Patent family member(s) | Publication date |
|---|---|---|---|
| US 2015025860 A1 | 22-01-2015 | CN 104300530 A | 21-01-2015 |
| | | EP 2827157 A1 | 21-01-2015 |
| | | US 2015025860 A1 | 22-01-2015 |

EPO FORM P0459

For more details about this annex : see Official Journal of the European Patent Office, No. 12/82